(19) Europäisches Patentamt
European Patent Office
Office européen des brevets

(11) Veröffentlichungsnummer: **0 212 265**
**B1**

(12) # EUROPÄISCHE PATENTSCHRIFT

(45) Veröffentlichungstag der Patentschrift: **05.12.90**

(51) Int. Cl.[5]: **C 08 G 63/68**, C 10 G 33/04, E 21 B 41/02

(21) Anmeldenummer: **86109806.9**

(22) Anmeldetag: **17.07.86**

(54) **Quaternäre oxalkylierte Polykondensate, Verfahren zu deren Herstellung und deren Verwendung.**

(30) Priorität: **25.07.85 DE 3526600**

(43) Veröffentlichungstag der Anmeldung: **04.03.87 Patentblatt 87/10**

(45) Bekanntmachung des Hinweises auf die Patenterteilung: **05.12.90 Patentblatt 90/49**

(84) Benannte Vertragsstaaten: **AT BE CH DE FR GB IT LI NL SE**

(56) Entgegenhaltungen:
**EP-A-0 074 622**
**EP-A-0 109 785**
**EP-A-0 144 975**

(73) Patentinhaber: **HOECHST AKTIENGESELLSCHAFT**
**Postfach 80 03 20**
**D-6230 Frankfurt am Main 80 (DE)**

(72) Erfinder: **Hofinger, Manfred, Dr.**
**Hoher Göll Weg 7**
**D-8269 Burgkirchen (DE)**
Erfinder: **Böse, Willibald, Dr.**
**Kanalstrasse 3**
**D-8269 Burgkirchen (DE)**
Erfinder: **Hille, Martin, Dr.**
**In den Eichen 46**
**D-6237 Liederbach (DE)**
Erfinder: **Böhm, Roland**
**Fischbacher Strasse 29**
**D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 212 265 B1

## Description

Die Erfindung betrifft quaternäre oxalkylierte Polykondensate, ein Verfahren zu deren Herstellung und deren Verwendung als Korrosionsinhibitoren und Demulgatoren für Rohölemulsionen.

Bei der Rohölförderung stellt die Korrosion von Fördereinrichtungen, Rohrleitungen und Aufbereitungsanlagen ein Problem dar, das über den Zeitraum der Ausbeutung eines Rohölfeldes immer mehr zunimmt. Während aus einem neuerschlossenen Rohölfeld in der Anfangsphase fast ausschließlich reines Rohöl gefördert wird, steigt der Wassergehalt des geförderten Rohöls nach einer bestimmten Zeit an. Die Rohöle enthalten korrosiv wirkende Bestandteile wie Elektrolyte, Schwefelwasserstoff und Kohlendioxid. Während jedoch das in der Anfangsphase geförderte reine Rohöl kaum zu Korrosionsproblemen führt, nehmen diese mit steigendem Wassergehalt stark zu. Aus dem Rohöl muß das Wasser, das darin emulsionsartig verteilt ist, vor dem Weitertransport durch Leitungen, Tankwagen oder Schiffe weitgehend abgetrennt werden. Zu diesem Zweck werden dem wasserhaltigen Rohöl sogenannte Demulgatoren oder Emulsionsspalter zugesetzt. Diese Substanzen wirken zwar selbst nicht korrodierend, jedoch fördern sie die Wasserbenetzung in der Anlage und leisten somit der Korrosion indirekt Vorschub.

Man hat schon versucht, diesen Nachteil durch Zugabe geeigneter Korrosionsinhibitoren zu beseitigen. Neben dem Kostenfaktor, der durch Einsatz solcher Inhibitoren bedingt ist, haben die meisten dieser Produkte den Nachteil, daß sie selbst emulgierend oder emulsionsstabilisierend wirken, was nur durch eine Erhöhung der für die optimale Abtrennung des Wassers erforderlichen Emulsionsspaltermenge ausgeglichen werden kann. Man hat schon kationische Verbindungen eingesetzt, die neben ihrer Wirkung als Korrosionsinhibitoren gleichzeitig auch gute demulgierende Eigenschaften besitzen. Solche Verbindungen sind beispielsweise bekannt aus der DE—AS 22 38 995 oder aus der DE—OS 31 36 298. Sie zeiger teilweise gute Demulgierwirkungen, erreichen aber nicht die von hocheffektiven nicht-ionischen Demulgatoren. Sie haben sich allein im großen Maßstab nicht durchsetzen können. Lediglich in einigen Ölfeldern haben Kombinationen mit nicht-ionischen Demulgatoren zu guten Ergebnissen bei der Rohöldemulgierung und Korrosionsinhibierung geführt, weil sich hier synergistische Effekte bei der Demulgierung ergaben. Es besteht jedoch weiterhin ein Bedürfnis nach Demulgatoren, die selbst korrosionsinhibierend wirken.

Für den genannten Zweck stellt die vorliegende Erfindung verbesserte Mittel zur Verfügung. Es sind dies quaternäre oxalkylierte Polykondensate der allgemeinen Formel

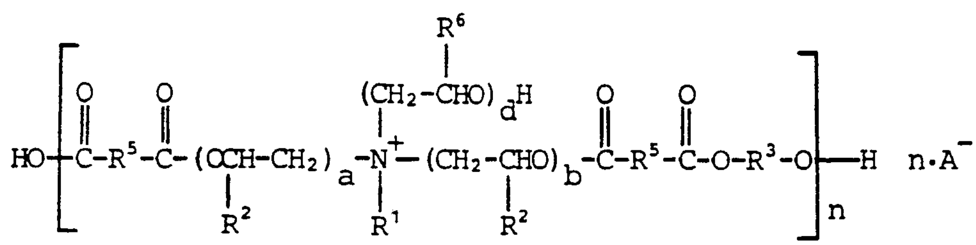 (I),

worin

$R^1$ ein Alkylrest oder Alkenylrest von 8 bis 23 C-Atomen ist,

$R^2$ H oder $CH_3$ ist und innerhalb der Kette des Polyoxalkylenrestes, in Blöcken angeordnet, auch beide Bedeutungen annehmen kann,

$R^3$ einen Alkylenrest der Formel $—(CH_2)_x$, in der x eine ganze Zahl von 1 bis 6 ist, oder einen Polyoxalkylenrest der Formel

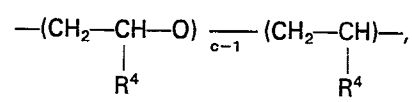

in der

$R^4$ H oder $CH_3$ ist und innerhalb der Kette, statistisch oder in Blöcken angeordnet, auch beide Bedeutungen annehmen kann und c eine ganze oder gebrochene Zahl von 2 bis 80 ist, bedeutet,

$R^5$ ein Alkylenrest der Formel $—(CH_2)_y—$, in der y eine ganze Zahl von 1 bis 8 bedeutet, wobei dieser Alkylenrest gegebenenfalls 1 bis 2 OH-Gruppen tragen kann, ein Vinylen- oder ein p-Phenylenrest ist,

$R^6$ H oder $CH_3$ ist,

$A^-$ das Anion einer Carbonsäure mit 2 bis 6 C-Atomen, einer Hydroxycarbonsäure mit 2 bis 6 C-Atomen und 1 bis 3 OH-Gruppen, das Anion der Benzoesäure, der Salicylsäure oder der Phosphorsäure bedeutet,

a und b, gleich oder verschieden, eine ganze oder gebrochene Zahl von 1 bis 15 ist,

d eine ganze oder gebrochene Zahl von 1 bis 2 ist, und

n eine ganze Zahl ist, die Werte von 2 bis 50 annehmen kann.

In bevorzugten Ausführungsformen der Erfindung nehmen die Definitionen in der Formel I die folgende Bedeutung an:

$R^1$ ist ein Alkylrest von 12 bis 18 C-Atomen; $R^2$ ist H und a und b, gleich oder verschieden, sind ganze oder gebrochene Zahlen von 1 bis 8; $R^3$ ist der Rest eines Block-Mischpolymerisates, bestehend aus mindestens einem Block von Ethylenoxid-Einheiten und mindestens einem Block von Propylenoxid-Einheiten, wobei die Gesamtzahl der Ethylenoxid-Einheiten eine ganze oder gebrochene Zahl von 15 bis 35, die der Propylenoxid-Einheiten eine solche von 20 bis 40 ist und die Summe aus beiden höchstens 60 beträgt; $R^5$ ist ein Alkylenrest der Formel $-(CH_2)_y-$, worin y eine ganze Zahl von 1 bis 8 bedeutet; $R^6$ ist H; und n ist eine ganze Zahl, die Werte von 2 bis 20 annehmen kann. Die Zahlen a, b, c und d stellen Mittelwerte dar.

Die Verbindungen der Formel I werden hergestellt, indem man ein oxalkyliertes primäres Fettamin der Formel

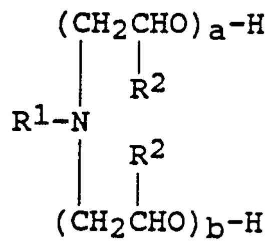

(II)

worin $R^1$, $R^2$, a und b die in Formel I angegebene Bedeutung haben, und eine Diolverbindung der Formel $HO-R^3OH$ (III), worin $R^3$ die in Formel I angegebene Bedeutung hat, mit einer Dicarbonsäure der Formel

$$HOOC-R^5-COOH \quad (IV),$$

worin $R^5$ die in Formel I angegebene Bedeutung hat, unter Polykondensation verestert, wobei das Molverhältnis von oxalkyliertem primärem Fettamin zu Diolverbindung 1:3 bis 3:1 beträgt und das Molverhältnis der Summe oxalkyliertes primäres Fettamin plus Diolverbindung zu Dicarbonsäure 0,8:1 bis 1:0,8 beträgt, und dann das erhaltene Reaktionsprodukt mit Ethylenoxid oder Propylenoxid in Gegenwart einer Carbonsäure mit 2 bis 6 C-Atomen, einer Hydroxycarbonsäure mit 2 bis 6 C-Atomen und 1 bis 3 OH-Gruppen, der Benzoesäure, der Salicylsäure oder der Phosphorsäure umsetzt.

Bevorzugt werden das oxalkylierte primäre Fettamin und die Diolverbindung in einem Molverhältnis von 1:1 bis 3:1 eingesetzt. Das Molverhältnis der Summe der Mole oxalkyliertes primäres Fettamin plus Diolverbindung zu der Molzahl an Dicarbonsäure beträgt vorzugsweise 1:0,8 bis 1:0,95.

Die als Ausgangsverbindungen der Formel II dienenden oxalkylierten primären Fettamine werden erhalten nach bekannten Verfahren der Oxalkylierung von primären Fettaminen. Eine Übersicht über Methoden zur Herstellung dieser wohlbekannten Verbindungsklasse wird gegeben in Schönfeldt, "Surface Active Ethyleneoxide Adducts", Wissenschaftliche Verlagsgesellschaft, Stuttgart, 1976, Seiten 70 bis 73. Die oxalkylierten Produkte können Einheiten des Propylenoxids, vorzugsweise aber solche des Ethylenoxids oder aber Ketten aus beiden Einheiten tragen, wobei im letzteren Fall die beiden verschiedenen Einheiten in Blöcken angeordnet sind.

Bevorzugte primäre Amine, die zu Ausgangsverbindungen der Formel II oxalkyliert werden können, sind die technisch verfügbaren Produkte Stearylamin oder Cocosamin. Es ist aber gemäß der Erfindung ebensogut möglich, andere Monoamine mit mehr oder weniger breiter Alkylkettenverteilung oder auch Amine mit einheitlicher Kette zu verwenden. Es können auch Fettamine einzeln oder im Gemisch eingesetzt werden, deren Ketten eine oder mehrere Doppelbindungen enthalten, wie beispielsweise die Reste der Öl-, Elaidin-, Linol- oder Linolensäure.

Solche oxalkylierten Fettamine stellen eine stickstoffhaltige, veresterungsfähige Diolkomponente dar.

Im Gemisch damit wird eine weitere Diolverbindung eingesetzt, die keinen Stickstoff enthält. Dieses Diol der Formel $HO-R^3-OH$, worin $R^3$ einen Alkylenrest der Formel $-(CH_2)_x-$ bedeutet und darin x eine ganze Zahl von 1 bis 6 ist, wird repräsentiert beispielsweise durch Butan-1,4-diol oder Hexan-1,6-diol, durch Polyethylenglykole oder Polypropylenglykole oder durch Mischpolymerisate von Ethylen- und Propylenoxid, das heißt $R^3$ ist ein Rest der Formel

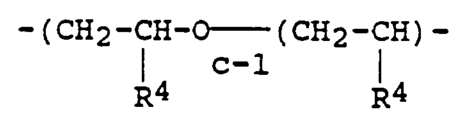

worin $R^4$ H oder $CH_3$ und c eine ganze oder gebrochene Zahl von 2 bis 80 ist. $R^4$ kann demgemäß auch innerhalb der Kette die Bedeutung von H und $CH_3$ annehmen, das heißt der Rest $R^3$ enthält Ethylenoxid- und Propylenoxid-Einheiten. Diese können statistisch angeordnet sein. Bevorzugt handelt es sich jedoch um Reste von Blockpolymerisaten, bestehend aus mindestens einem Block von Ethylenoxid-Einheiten, und mindestens einem Block von Propylenoxid-Einheiten, wobei die Gesamtzahl der Ethylenoxid-Einheiten

eine ganze oder gebrochene Zahl von 15 bis 35, die der Propylenoxid-Einheiten eine solche von 20 bis 40 ist und die Summe aus beiden höchstens 60 beträgt.

Besonders bevorzugt sind Blockpolymerisate, in denen an einem Propylenoxid-Block beidseitig Ethylenoxid-Blöcke gebunden sind, wobei dafür die vorstehend angegebenen Gesamtzahlen an Einheiten gelten.

Beide Diolkomponenten — der Formel II und der Formel III — werden mit einer Dicarbonsäure der Formel IV verestert.

Zur Veresterung geeignete Dicarbonsäuren sind aliphatische Dicarbonsäuren mit $C_1$- bis $C_8$-Alkylengruppen, wie Malonsäure, Bernsteinsäure, Glutarsäure, Adipinsäure, Sebacinsäure oder aliphatische Dicarbonsäuren, die durch 1 bis 2 OH-Gruppen substituiert sind, wie Äpfelsäure, Tartronsäure, Weinsäure sowie ferner auch die Fumarsäure oder die Maleinsäure. Besonders geeignet sind die aliphatischen Dicarbonsäuren mit 4 bis 8 C-Atomen im Alkylenrest, also die homologe Reihe von der Adipin- bis zur Sebacinsäure. Bei der Veresterungsreaktion können auch Derivate solcher Dicarbonsäuren, insbesondere deren Ester und Säurehalogenide, eingesetzt werden.

Die unter Polykondensation verlaufende Veresterung der Verbindungen der Formel II und III erfolgt nach bekannten Methoden mit einer Dicarbonsäure der Formel IV in hohersiedenden inerten Lösungsmitteln, wie Toluol oder Xylol, oder bevorzugt ohne Lösungsmittel in der Schmelze und unter Abdeckung mit einem Schutzgas. Bei Veresterung in einem Lösungsmittel wählt man als Reaktionstemperatur zweckmäßigerweise die Rückflußtemperatur des Reaktionsgemisches und entfernt das gebildete Reaktionswasser durch azeotrope Destillation. Bei Veresterung in Substanz wird das Reaktionswasser direkt aus der Reaktionsmischung abdestilliert. Die Reaktionstemperaturen liegen hier bei 140 bis 220°C, bevorzugt bei 150 bis 180°C. Zur Beschleunigung der Reaktion verwendet man einen sauren Katalysator, wie zum Beispiel p-Toluolsulfonsäure oder hypophosphorige Säure. Die Vollständigkeit der Reaktion wird über die Bestimmung der Amin- und Säurezahl kontrolliert.

Die analytische Bestimmung des mittleren Polykondensationsgrades der erhaltenen Produkte und damit der mittleren Molmasse kann chromatographisch durch HPLC oder HPSEC erfolgen.

Die Quaternisierungsreaktion wird mit Ethylen- oder Propylenoxid, vorzugsweise mit Ethylenoxid, bei einer Temperatur von 75 bis 85°C in einem geeigneten Rührautoklaven durchgeführt, wobei eine maximaler Reaktionsdruck von 3 bar zweckmäßigerweise nicht überschritten werden sollte. Dabei wird zur Salzbildung mit einer äquivalenten Mente (entsprechend der Zahl der N-Atome) einer derjenigen Carbonsäuren oder Mineralsäuren umgesetzt, die den oben definierten Anionen $A^-$ zugrundeliegen. Carbonsäuren sind beispielsweise Essigsäure, Propionsäure oder solche, die gegebenenfalls auch 1 bis 3 Hydroxygruppen tragen, wie Glykolsäure und Milchsäure. Die Carbonsäure kann auch eine — gegebenenfalls OH-substituierte — Di- oder Tricarbonsäure sein, wie Bernsteinsäure, Malon-, Malein-, Fumar-, Äpfel-, Wein- oder Citronensäure oder auch Benzoesäure oder Salicylsäure. Schließlich kommt als Mineralsäure in Betracht Phosphorsäure. Bevorzugt sind Milchsäure, Weinsäure und Phosphorsäure. Die Quaternisierungsgrade, werden durch Zweiphasentitration des quaternären Produktes der Formel I mit Natriumdodecylsulfat bei pH 1 bis 2 beziehungsweise pH 10 ermittelt.

Die erfindungsgemäßen Produkte sind besonders in der Demulgierwirkung den herkömmlichen kationischen Demulgatoren überlegen. In den Tabellen II bis IV werden sie mit einem herkömmlichen kationischen Demulgator gemäß DE—AS 22 38 995 verglichen und zeigen die eindeutig bessere Spalterwirkung. Das Vergleichsbeispiel Z ist ein quaternäres Produkt aus 2 mol Stearylamin, kondensiert mit Ethylenoxid (enthaltend 10 Einheiten) und p-Xylylendichlorid. Die Tabelle V demonstriert den besseren Korrosionsschutz der erfindungsgemäßen Verbindungen.

Die Erfindung wird durch folgende Beispiele näher erläutert:

### Beispiel 1

a) Herstellung eines Polykondensationsproduktes aus Adipinsäure, Hexan-1,6-diol und einem Stearylamin, das mit 15 mol Ethylenoxid kondensiert ist:

In einem 1-l-Reaktionskolben, versehen mit Wasserabscheider, Gaseinleitungsrohr und Heizung werden 451 g (0,5 mol) eines Stearylamins kondensiert mit 15 mol Ethylenoxid, 59,1 g (0,5 mol) Hexan-1,6-diol, 100,5 g (0,85 mol) Adipinsäure und 1,5 g 50 gew.-%ige hypophosphorige Säure vorgelegt, unter Stickstoff-Atmosphäre auf 160°C gebracht und unter kontinuierlicher Wasserabscheidung die Veresterungsreaktion bei dieser Temperatur fortgesetzt.

Nach 20 stündiger Reaktionszeit wird nach Bestimmung der Säure- und Aminzahl ein praktisch vollständiger Kondensationsumsatz ermittelt.

b) Quaternisierung des erhaltenen Polykondensats mit Carbonsäure und Alkylenoxid:

301 g (0,25 mol, berechnet auf die wiederkehrende Einheit) des gemäß Beispiel 1 a) erhaltenen Polykondensats, werden in Gegenwart von 18 g (1 mol) Wasser und 20 g Isobutanol mit 31 g (0,25 mol) 70 gew.-%iger Milchsäure neutralisiert und mit 55,1 g (1,25 mol) Ethylenoxid quaternisiert. Die Reaktion ist bei einer Temperatur von 80 bis 85°C und einem maximalen Druck von 2,6 bar in 12 h beendet. Es resultiert eine bei Raumtemperatur klare Flüssigkeit. Der Quaternisierungsgrad des quaternären Polyterkondensationsproduktes wird aus dem Verhältnis der sauren beziehungsweise alkalischen Zweiphasentitration mit Natriumdodecylsulfat bestimmt und beträgt 93%.

Unter den in Beispiel 1 beschriebenen Reaktionsbedingungen werden weiterhin die in der folgenden Tabelle I, Beispiel 2 bis 35, angegebenen Verbindungen der Formel I zur Umsetzung gebracht, wobei die aufgeführten Quaternisierungsgrade erhalten werden:

T a b e l l e   I

| Beispiel | Dicarbonsäurekomponente | Aminoxalkylatkomponente | Diolkomponente | Anion | Quaternisierungsgrad (%) |
|---|---|---|---|---|---|
| | Menge (g) / Molverhältnis | | | | |
| 2 | Adipinsäure 64,6 / 0,85 | A 90,5 / 0,5 | N 460,2 / 0,5 | Milchsäure | 37 |
| 3 | Adipinsäure 199 / 0,85 | A 278 / 0,5 | P 258 / 0,5 | Milchsäure | 55 |
| 4 | Adipinsäure 49,7 / 0,85 | A 69,5 / 0,5 | O 631,7 / 0,5 | Milchsäure | 13 |
| 5 | Adipinsäure 218,5 / 0,833 | A 315 / 0,5 | R 106,4 / 0,5 | Milchsäure | 67 |
| 6 | Adipinsäure 121,7 / 0,83 | A 174,8 / 0,5 | Q 201,1 / 0,5 | Milchsäure | 55 |
| 7 | Adipinsäure 91,3 / 0,833 | B 233,4 / 0,8 | Q 60,0 / 0,2 | Milchsäure | 76 |
| 8 | Adipinsäure 39,3 / 0,83 | C 68,3 / 0,5 | N 274,2 / 0,5 | Milchsäure | 48 |
| 9 | Adipinsäure 62,1 / 0,85 | D 148,4 / 0,5 | N 442,5 / 0,5 | Milchsäure | 60 |
| 10 | Adipinsäure 82,7 / 0,85 | D 290,4 / 0,75 | O 433,1 / 0,25 | Milchsäure | 71 |

Fortsetzung zu Tabelle I

| Beispiel | Dicarbonsäurekomponente | Aminoxalkylatkomponente | Diolkomponente | Anion | Quaternisierungsgrad (%) |
|---|---|---|---|---|---|
| | Menge (g) / Molverhältnis | | | | |
| 11 | Adipinsäure 41,4 / 0,85 | D 48,4 / 0,25 | O 652,2 / 0,75 | Milchsäure | 22 |
| 12 | Adipinsäure 121,7 / 0,83 | E 271,0 / 0,5 | Q 201 / 0,5 | Milchsäure | 90 |
| 13 | Adipinsäure 124,3 / 0,85 | F 451 / 0,5 | Q 197 / 0,5 | Milchsäure | 81 |
| 14 | Adipinsäure 49,7 / 0,85 | F 354 / 0,5 | N 180,4 / 0,5 | Milchsäure | 72 |
| 15 | Adipinsäure 37,2 / 0,85 | F 135,3 / 0,5 | O 379 / 0,5 | Milchsäure | 61 |
| 16 | Adipinsäure 100,5 / 0,85 | F 451 / 0,5 | R 59,1 / 0,5 | Milchsäure | 93 |
| 17 | Adipinsäure 124,3 / 0,85 | F 450,9 / 0,5 | P 161,2 / 0,5 | Milchsäure | 71 |
| 18 | Adipinsäure 174 / 0,85 | G 522,6 / 0,5 | R 82,7 / 0,5 | Milchsäure | 84 |
| 19 | Adipinsäure 124,3 / 0,85 | G 373,3 / 0,5 | P 161,2 / 0,5 | Milchsäure | 77 |
| 20 | Adipinsäure 124,3 / 0,85 | G 374 / 0,5 | Q 197 / 0,5 | Milchsäure | 82 |

Fortsetzung zu Tabelle I

| Beispiel | Dicarbonsäurekomponente | Aminoxalkylatkomponente | Diolkomponente | Anion | Quaternisierungsgrad (%) |
|---|---|---|---|---|---|
| | Menge (g) / Molverhältnis | | | | |
| 21 | Adipinsäure 248,5 / 0,85 | H 377,8 / 0,5 | R 118,2 / 0,5 | Milchsäure | 72 |
| 22 | Adipinsäure 194,9 / 0,85 | H 302,2 / 0,5 | P 257,9 / 0,5 | Milchsäure | 61 |
| 23 | Adipinsäure 161,6 / 0,85 | H 245,6 / 0,5 | Q 256,1 / 0,5 | Milchsäure | 64 |
| 24 | Adipinsäure 174,0 / 0,85 | I 451,5 / 0,5 | Q 276,0 / 0,5 | Milchsäure | 81 |
| 25 | Adipinsäure 149,1 / 0,85 | I 386,9 / 0,5 | P 193,4 / 0,5 | Milchsäure | 82 |
| 26 | Adipinsäure 161,6 / 0,83 | I 454,6 / 0,5 | R 76,8 / 0,5 | Milchsäure | 83 |
| 27 | Adipinsäure 82,7 / 0,85 | J 145,7 / 0,75 | O 433,1 / 0,25 | Milchsäure | 47 |
| 28 | Adipinsäure 49,7 / 0,85 | J 29,1 / 0,75 | O 782,7 / 0,75 | Milchsäure | nicht bestimmt |
| 29 | Adipinsäure 36,6 / 0,83 | M 82,9 / 0,5 | O 377,4 / 0,5 | Milchsäure | 55 |
| 30 | Adipinsäure 48,5 / 0,83 | K 70,3 / 0,5 | O 521,8 / 0,5 | Milchsäure | 55 |

Fortsetzung zu Tabelle I

| Beispiel | Dicarbonsäure-komponente | Aminoxalkylat-komponente | Diol-komponente | Anion | Quaternisierungsgrad (%) |
|---|---|---|---|---|---|
| | Menge (g) Molverhältnis | | | | |
| 31 | Adipinsäure<br>121,7 / 0,833 | K<br>175,9 / 0,5 | Q<br>201 / 0,5 | Milchsäure | 74 |
| 32 | Adipinsäure<br>99,3 / 0,85 | K<br>211 / 0,75 | N<br>340 / 0,25 | Milchsäure | 56 |
| 33 | Adipinsäure<br>74,5 / 0,85 | K<br>158,3 / 0,75 | O<br>391,4 / 0,25 | Milchsäure | 62 |
| 34 | Adipinsäure<br>74,5 / 0,85 | L<br>238,1 / 0,75 | O<br>391,3 / 0,25 | Milchsäure | 74 |
| 35 | Adipinsäure<br>41,4 / 0,85 | L<br>44,1 / 0,25 | O<br>652,2 / 0,75 | Milchsäure | 26 |

Die in Tabelle I gebrauchten Abkürzungen haben folgende Bedeutung:
A = Stearylamin, kondensiert mit 2 mol Ethylenoxid
B = Stearylamin, kondensiert mit 3 mol Ethylenoxid
C = Stearylamin, kondensiert mit 5 mol Ethylenoxid
D = Stearylamin, kondensiert mit 8 mol Ethylenoxid
E = Stearylamin, kondensiert mit 10 mol Ethylenoxid
F = Stearylamin, kondensiert mit 15 mol Ethylenoxid
G = Oleylamin, kondensiert mit 12 mol Ethylenoxid
H = Talgfettalkylamin, kondensiert mit 2 mol Ethylenoxid
I = Talgfettalkylamin, kondensiert mit 10 mol Ethylenoxid
J = Cocosalkylamin, kondensiert mit 2 mol Ethylenoxid
K = Cocosalkylamin, kondensiert mit 5 mol Ethylenoxid
L = Cocosalkylamin, kondensiert mit 10 mol Ethylenoxid
M = Cocosalkylamin, kondensiert mit 2 mol Ethylenoxid und 5 mol Propylenoxid
N = Blockpolymeres aus 32 mol Propylenoxid und 4 mol Ethylenoxid
O = Blockpolymeres aus 32 mol Propylenoxid und 28 mol Ethylenoxid
P = Polypropylenglykol, Molgewicht 400
Q = Polyethylenglykol, Molgewicht 400
R = Hexan-1,6-diol

## Tabelle II

| | |
|---|---|
| Ursprung der Rohölemulsion: | Borneo |
| Wassergehalt der Rohölemulsion: | 18 Vol.-% |
| Demulgiertemperatur: | 42 °C |
| Dosiermenge: | 80 ppm |

| Spaltertyp aus Beispiel | Wasserseparation in Vol.-% nach Minuten | | | | | | Restwassergehalt in Vol.-% in der Ölphase |
|---|---|---|---|---|---|---|---|
| | 10 | 20 | 30 | 60 | 120 | 180 | |
| 3 | 31 | 75 | 95 | 99 | 100 | 100 | 0.07 |
| 5 | 76 | 86 | 93 | 97 | 100 | 100 | 0,08 |
| 23 | 43 | 71 | 82 | 88 | 94 | 95 | 0,14 |
| Z | 22 | 44 | 55 | 61 | 64 | 67 | 0,85 |
| Blindwert | 0 | 0 | 0 | 0 | 0 | 0 | 4,25 |

T a b e l l e III

| | |
|---|---|
| Ursprung der Rohölemulsion: | Emsland (BR Deutschland) |
| Wassergehalt der Rohölemulsion: | 66 Vol.-% |
| Salzgehalt der Rohölemulsion: | 11,48 Gew.-% |
| Demulgiertemperatur: | 55 °C |
| Dosiermenge: | 35 ppm |

| Spaltertyp aus Beispiel | Wasserseparation in Vol.-% nach Stunden | | | | | | | Restsalzgehalt in Gew.-% in der Ölphase |
|---|---|---|---|---|---|---|---|---|
| | 1 | 3 | 6 | 9 | 12 | 18 | 24 | |
| 11 | 60 | 70 | 78 | 87 | 96 | 99 | 100 | 0,04 |
| 15 | 31 | 44 | 60 | 75 | 91 | 98 | 99 | 0,07 |
| 27 | 49 | 61 | 71 | 78 | 88 | 95 | 100 | 0,04 |
| 28 | 66 | 78 | 86 | 93 | 98 | 100 | 100 | 0,01 |
| 30 | 8 | 26 | 47 | 75 | 83 | 97 | 100 | 0,03 |
| Z | 24 | 34 | 44 | 51 | 56 | 58 | 60 | 2,76 |
| Blindwert | 0 | 0 | 0 | 0 | 0 | 0 | 0 | 6,26 |

Tabelle IV

| | |
|---|---|
| Ursprung der Rohölemulsion: | Venezuela |
| Wassergehalt der Rohölemulsion: | 32 Vol.-% |
| Demulgiertemperatur: | 85 °C |
| Dosiermenge | 48 ppm |

| Spaltertyp aus Beispiel | Wasserseparation in Vol.-% nach Minuten | | | | | | Restwasser in Vol.-% in der Ölphase |
|---|---|---|---|---|---|---|---|
| | 10 | 20 | 30 | 40 | 50 | 60 | |
| 10 | 41 | 64 | 83 | 96 | 100 | 100 | 0,26 |
| 27 | 56 | 58 | 60 | 85 | 95 | 100 | 0,46 |
| 29 | 64 | 77 | 86 | 94 | 98 | 99 | 0,64 |
| 30 | 81 | 87 | 93 | 96 | 100 | 100 | 0,34 |
| 34 | 90 | 94 | 96 | 99 | 100 | 100 | 0,18 |
| Z | 49 | 54 | 58 | 60 | 63 | 65 | 1,18 |
| Blindwert | 0 | 0 | 0 | 0 | 0 | 0 | 9,24 |

Inhibierwirkung der Korrosion

Die Inhibitorwirkung einiger der erfindungsgemäßen Verbindungen wird durch den Gewichtsverlust von Coupons aus Kohlenstoffstahl mit 20 $cm^2$ Oberfläche bestimmt. Diese tauchen 6 Stunden in Wasser mit 20% Natriumchlorid und 60°C ein. Durch die ständig gerührte Lösung perlt während der Versuchsdauer ein Kohlendioxidstrom. Die Inhibierung wird in % angegeben, wobei der Blindwert ohne Inhibitor als Bezugsgröße 0% ist (dies entspricht 100% Gewichtsverlust).

Tabelle V

| Produkt aus Beispiel | Einsatzmenge 10 ppm | 60 ppm |
|---|---|---|
| | % Inhibierung | |
| 3 | 88,1 | 88,8 |
| 10 | 90,0 | 93,7 |
| 19 | 84,1 | 86,3 |
| 20 | 82,7 | 83,9 |
| 34 | 82,8 | 89,7 |

**Patentansprüche**

1. Quaternäre oxalkylierte Polykondensate der allgemeinen Formel

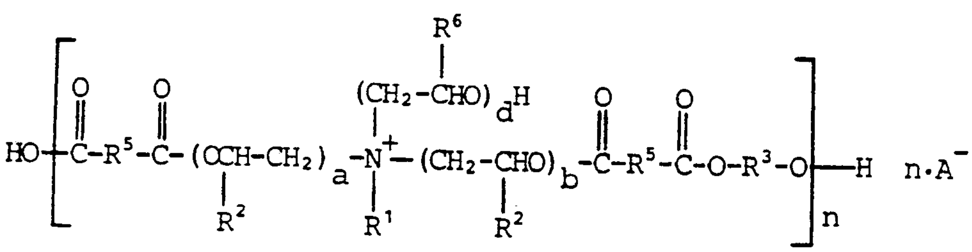

(I),

worin

$R^1$ ein Alkylrest oder Alkenylrest von 8 bis 23 C-Atomen ist,

$R^2$ H oder $CH_3$ ist und innerhalb der Kette des Polyoxalkylenrestes, in Blöcken angeordnet, auch beide Bedeutungen annehmen kann,

$R^3$ einen Alkylenrest der Formel $-(CH_2)_x$, in der x eine ganze Zahl von 1 bis 6 ist, oder einen Polyoxalkylenrest der Formel

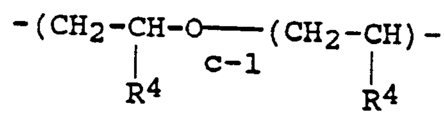

in der

$R^4$ H oder $CH_3$ ist und innerhalb der Kette, statistisch oder in Blöcken angeordnet, auch beide Bedeutungen annehmen kann und c eine ganze oder gebrochene Zahl von 2 bis 80 ist, bedeutet,

$R^5$ ein Alkylenrest der Formel $-(CH_2)_y-$, in der y eine ganze Zahl von 1 bis 8 bedeutet, wobei dieser Alkylenrest gegebenenfalls 1 bis 2 OH-Gruppen tragen kann, ein Vinylen- oder ein p-Phenylenrest ist,

$R^6$ H oder $CH_3$ ist,

$A^-$ das Anion einer Carbonsäure mit 2 bis 6 C-Atomen, einer Hydroxycarbonsäure mit 2 bis 6 C-Atomen und 1 bis 3 OH-Gruppen, das Anion der Benzoesäure, der Salicylsäure oder der Phosphorsäure bedeutet,

a und b, gleich oder verschieden, eine ganze oder gebrochene Zahl von 1 bis 15 ist,
d eine ganze oder gebrochene Zahl von 1 bis 2 ist, und
n eine ganze Zahl ist, die Werte von 2 bis 50 annehmen kann.

2. Quaternäre oxalkylierte Polykondensate gemäß Anspruch 1, dadurch gekennzeichnet, daß $R^1$ ein Alkylrest von 12 bis 18 C-Atomen ist.

3. Quaternäre oxalkylierte Polykondensate gemäß Anspruch 1 und 2, dadurch gekennzeichnet, daß $R^2$ H ist und a und b, gleich oder verschieden, eine ganze oder gebrochene Zahl von 1 bis 8 ist.

4. Quaternäre oxalkylierte Polykondensate gemäß einem oder mehreren der Ansprüche 1 bis 3, dadurch gekennzeichnet, daß $R^3$ der Rest eines Blockmischpolymerisates, bestehend aus mindestens einem Block von Ethylenoxid-Einheiten und mindestens einem Block von Propylenoxid-Einheiten ist, wobei die Gesamtzahl der Ethylenoxid-Einheiten eine ganze oder gebrochene Zahl von 15 bis 35, die der Propylenoxid-Einheiten eine solche von 20 bis 40 ist und die Summe aus beiden höchstens 60 beträgt.

5. Quaternäre oxalkylierte Polykondensate gemäß einem oder mehreren der Ansprüche 1 bis 4, dadurch gekennzeichnet, daß $R^5$ ein Alkylenrest der Formel $—(CH_2)_y—$ ist, worin y eine ganze Zahl von 1 bis 8 bedeutet.

6. Quaternäre oxalkylierte Polykondensate gemäß einem oder mehreren der Ansprüche 1 bis 5, dadurch gekennzeichnet, daß $R^6$ H ist.

7. Quaternäre oxalkylierte Polykondensate gemäß einem oder mehreren der Ansprüche 1 bis 6, dadurch gekennzeichnet, daß n eine ganze Zahl ist, die Werte von 2 bis 20 annehmen kann.

8. Verfahren zur Herstellung von quaternären oxalkylierten Polykondensaten der Formel I gemäß Anspruch 1, dadurch gekennzeichnet, daß ein oxalkyliertes primäres Fettamin der Formel

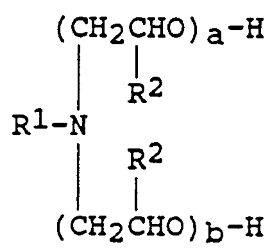

(II)

in der $R^1$, $R^2$, a und b die in Formel I angegebenen Bedeutungen haben, und eine Diolverbindung der Formel

$$HO—R^3—OH \quad (III),$$

in der $R^3$ die in Formel I angegebene Bedeutung hat, mit einer Dicarbonsäure der Formel

$$HOOC—R^5—COOH \quad (IV),$$

in der $R^5$ die in Formel I angegebene Bedeutung hat, unter Polykondensation verestert wird, wobei das Molverhältnis von oxalkyliertem primärem Fettamin zu Diolverbindung 1:3 bis 3:1 beträgt und das Molverhältnis der Summe oxalkyliertes primäres Fettamin plus Diolverbindung zu Dicarbonsäure 0,8:1 bis 1:0,8 beträgt, und dann das erhaltene Reaktionsprodukt mit Ethylenoxid oder Propylenoxid in Gegenwart einer Carbonsäure mit 2 bis 6 C-Atomen, einer Hydroxycarbonsäure mit 2 bis 6 C-Atomen und 1 bis 3 OH-Gruppen, der Benzoesäure, der Salicylsäure oder der Phosphorsäure umsetzt.

9. Verwendung der Verbindungen gemäß Anspruch 1 als Demulgatoren für die Spaltung von Rohölemulsionen und als Korrosionsinhibitoren in Anlagen für die Erdgas- und Rohölförderung und -aufbereitung.

**Revendications**

1. Polycondensats alcoxylés quaternaires qui répondent à la Formule générale:

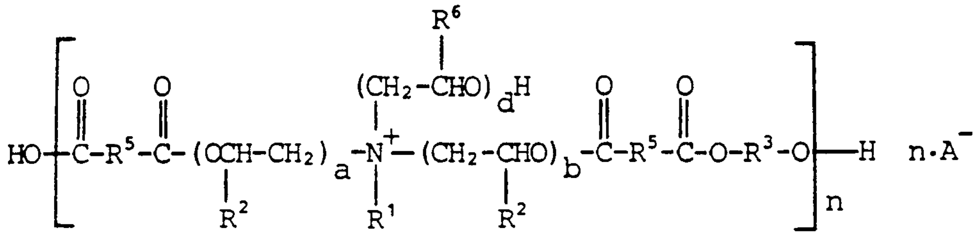

(I),

dans laquelle

$R^1$ représente un radical alkyle ou alcényle contenant de 8 à 23 atomes de carbone,

$R^2$ représente H ou $CH_3$, les $R^2$ pouvant aussi prendre les deux significations à l'intérieur de la chaîne du radical poly-(alkylène-oxy), avec une disposition séquencée,

$R^3$ représente un radical alkylène de formule $-(CH_2)_x$, dans lequel x désigne un nombre entier de 1 à 6, ou un radical poly-(alkylène-oxy) de formule:

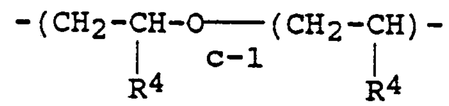

dans lequel $R^4$ représente H ou $CH_3$, les $R^4$ pouvant aussi prendre les deux significations à l'intérieur de la chaîne, avec une répartition statistique ou séquencée, et c désigne un nombre entier ou fractionnaire pouvant aller de 2 à 80,

$R^5$ représente un radical alkylène de formule $-(CH_2)_y-$, dans lequel y désigne un nombre entier de 1 à 8, ce radical alkylène pouvant porter éventuellement 1 ou 2 radicaux OH, ou représente un radical vinylène ou p-phénylène,

$R^6$ représente H ou $CH_3$,

$A^-$ représente l'anion d'un acide carboxylique contenant de 2 à 6 atomes de carbone, d'un acide hydroxycarboxylique contenant de 2 à 6 atomes de carbone et de 1 à 3 radicaux OH, l'anion de l'acide benzoïque, de l'acide salicylique ou de l'acide phosphorique,

a et b représentent chacun, indépendamment l'une de l'autre, un nombre entier ou fractionnaire de 1 à 15,

d désigne un nombre entier ou fractionnaire de 1 à 2, et

n désigne un nombre entier qui peut prendre des valeurs de 2 à 50.

2. Polycondensats alcoxylés quaternaires selon la revendication 1, caractérisés en ce que $R^1$ représente un radical alkyle contenant de 12 à 18 atomes de carbone.

3. Polycondensats alcoxylés quaternaires selon l'une des revendications 1 et 2, caractérisés en ce que $R^2$ représente H et en ce que a et b représentent chacun, indépendamment l'un de l'autre, un nombre entier ou fractionnaire de 1 à 8.

4. Polycondensats alcoxylés quaternaires selon l'une quelconque des revendications 1 à 3, polycondensats caractérisés en ce que $R^3$ représente le radical d'un copolymère séquence constitué d'au moins une séquence de motifs d'oxyde d'éthylène et d'au moins une séquence de motifs d'oxyde de propylène, le nombre total des motifs d'oxyde d'éthylène étant un nombre entier ou fractionnaire de 15 à 35, celui des motifs d'oxyde de propylène un nombre de ce genre de 20 à 40, et la somme des deux étant au plus égale à 60.

5. Polycondensats alcoxylés quaternaires selon l'une quelconque des revendications 1 à 4, polycondensats caractérisés en ce que $R^5$ représente un radical alkylène de Formule $-(CH_2)_y-$ dans lequel y désigne un nombre entier de 1 à 8.

6. Polycondensats alcoxylés quaternaires selon l'une quelconque des revendications 1 à 5, polycondensats caractérisés en ce que $R^6$ représente H.

7. Polycondensats alcoxylés quaternaires selon l'une quelconque des revendications 1 à 6, polycondensats caractérisés en ce que n désigne un nombre entier qui peut prendre des valeurs de 2 à 20.

8. Procédé pour préparer des polycondensats alcoxylés quaternaires de Formule I selon la revendication 1, procédé caractérisé en ce qu'on estérifie, en même temps qu'on polycondense, une amine grasse primaire alcoxylée répondant à la formule:

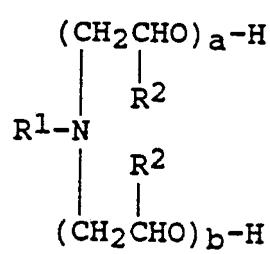
(II)

dans laquelle $R^1$, $R^2$, a et b ont les significations qui leur ont été données à propos de la Formule I, et un diol répondant à la formule:

$$HO-R^3-OH \qquad (III)$$

dans laquelle $R^3$ a la signification qui lui a été donnée à propos de la formule I, avec un acide dicarboxylique répondant à la formule:

$$HOOC—R^5—COOH \quad (IV)$$

dans laquelle $R^5$ a la signification qui lui a été donnée à propos de la formule I, le rapport molaire de l'amine grasse primaire alcoxylée au diol étant compris entre 1:3 et 3:1 et le rapport molaire de la somme amine grasse primaire alcoxylée + diol à l'acide dicarboxylique étant compris entre 0,8:1 et 1:0,8, puis on fait réagir le produit réactionnel obtenu avec l'oxyde d'éthylène ou l'oxyde de propylène en présence d'un acide carboxylique contenant de 2 à 6 atomes de carbone, d'un acide hydroxycarboxylique contenant de 2 à 6 atomes de carbone et portant de 1 à 3 radicaux —OH, de l'acide benzoïque, de l'acide salicylique ou de l'acide phosphorique.

9. Application des composés selon la revendication 1 comme désémulsionnant devant servir à rompre les émulsions de pétrole brut et comme inhibiteurs de corrosion dans des installations pour l'extaction et le traitement du gaz naturel et du pétrole brut.

**Claims**

1. A quaternary oxalkylated polycondensate of the formula

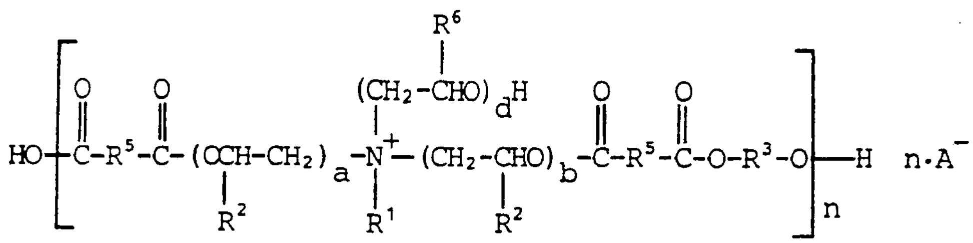

(I),

in which

$R^1$ is an alkyl radical or alkenyl radical having 8 to 23 carbon atoms,

$R^2$ is H or $CH_3$ and, arranged in blocks within the chain of the polyoxalkylene radical, can also assume both meanings,

$R^3$ denotes an alkylene radical of formula $—(CH_2)_x—$ in which x is an integer from 1 to 6 or denotes a polyoxalkylene radical of the formula

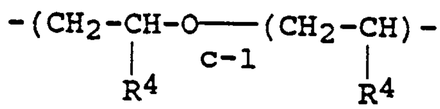

in which $R^4$ is H or $CH_3$ and, arranged statistically or in blocks within the chain, can also assume both meanings, and c is an integer or fractional number from 2 to 80,

$R^5$ is an alkylene radical of the formula $—(CH_2)_y—$ in which y denotes an integer from 1 to 8, it being possible for this alkylene radical optionally to carry 1 to 2 OH groups, or $R^5$ is a vinylene radical or a p-phenylene radical,

$R^6$ is H or $CH_3$,

$A^-$ denotes the anion of a carboxylic acid having 2 to 6 carbon atoms or of a hydroxycarboxylic acid having 2 to 6 carbon atoms and 1 to 3 OH groups or denotes the anion of benzoic acid, salicylic acid or phosphoric acid,

a and b are identical or different and are an integer or fractional number from 1 to 15,

d is an integer or fractional number from 1 to 2 and

n is an integer which can assume values from 2 to 50.

2. A quaternary oxalkylated polycondensate as claimed in claim 1, wherein $R^1$ is an alkyl radical having 12 to 18 carbon atoms.

3. A quaternary oxalkylated polycondensate as claimed in claims 1 and 2, wherein $R^2$ is H and a and b are identical or different and are an integer or a fractional number from 1 to 8.

4. A quaternary oxalkylated polycondensate as claimed in claims 1 to 3, wherein $R^3$ is the radical of a block copolymer composed of at least one block of ethylene oxide units and at least one block of propylene oxide units, the total number of ethylene oxide units being an integer or fractional number from 15 to 35, the total number of propylene oxide units being an integer or fractional number from 20 to 40 and the sum of the two being not more than 60.

5. A quaternary oxalkylated polycondensate as claimed in claims 1 to 4, whererin $R^5$ is an alkylene radical of the formula $—(CH_2)_y—$ in which y denotes an integer from 1 to 8.

6. A quaternary oxalkylated polycondensate as claimed in claims 1 to 5, wherein $R^6$ is H.

7. A quaternary oxalkylated polycondensate as claimed in claims 1 to 6, wherein n is an integer which can assume values from 2 to 20.

8. A process for the preparation of quaternary oxalkylated polycondensates of the formula I as claimed in claim 1, which comprises esterifying, with polycondensation, an oxalkylated primary fatty amine of the formula

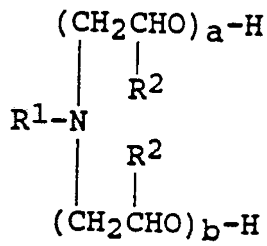

(II)

in which $R^1$, $R^2$, a and b have the meanings indicated in formula I and a diol compound of the formula

$$HO—R^3—OH \qquad (III)$$

in which $R^3$ has the meaning indicated in formula I, with a dicarboxylic acid of the formula

$$HOOC—R^5—COOH \qquad (IV)$$

in which $R^5$ has the meaning indicated in the formula I, the molar ratio of oxalkylated primary fatty amine to diol compound being 1:3 to 3:1 and the molar ratio of the sum of the oxalkylated primary fatty amine plus the diol compound to the dicarboxylic acid being 0.8:1 to 1:0.8, and then reacting the resulting reaction product with ethylene oxide or propylene oxide in the presence of a carboxylic acid having 2 to 6 carbon atoms, or a hydroxycarboxylic acid having 2 to 6 carbon atoms and 1 to 3 OH groups, or benzoic acid, salicylic acid or phosphoric acid.

9. The use of the compounds as claimed in claim 1 as demulsifiers for the separation of crude oil emulsions and as corrosion inhibitors in natural gas and petroleum recovery and refining equipment.